# EUROPÄISCHE PATENTANMELDUNG

(11) **EP 0 702 255 A1**
(43) Veröffentlichungstag der Anmeldung: **20.03.1996**
(21) Anmeldenummer: 95110405.8
(22) Anmeldetag: 04.07.1995
(51) Int. Cl.: G02B 6/44

(54) **Metallfreies optisches Luftkabel**

(30) Priorität: 15.09.1994 DE 4432843
(71) Anmelder: Alcatel Kabel Beteiligungs-AG, D-30002 Hannover (DE)
(72) Erfinder: Jansen, Ulrich, Dipl.-Ing., D-41849 Wassenberg (DE); Fischer, Norbert, Dipl.-Ing., D-41189 Mönchen-gladbach (DE); Wichura, Dieter, Dipl.-Phys., D-41844 Wegberg (DE)
(74) Vertreter: Mende, Eberhard, Dipl.-Ing.

(57) **Zusammenfassung**

Bei einem metallfreien Luftkabel aus um einen zugfesten Kern verseilten optischen Hohl- oder Bündeladern sowie einer weiteren mehrschichtigen Schutzumhüllung weist der zugfeste Kern eine elastische Kunststoffummantelung auf, auf der die Hohl- oder Bündeladern mit einer Bedeckung von 60 - 80 %, vorzugsweise 70 - 90 % aufgeseilt sind.

## Beschreibung

Gegenstand der vorliegenden Anmeldung ist ein metallfreies Luftkabel aus um einen zugfesten Kern verseilten optischen Hohl- oder Bündeladern sowie einer weiteren mehrschichtigen Schutzumhüllung.

Im Bereich der Energieversorgung durch Hochspannungs-Freileitungsnetze beispielsweise hat man bereits (ETZ Nr. 106 (1985) Heft 4, Seite 154 ff.) Luftkabel mit Lichtwellenleitern zur Nachrichtenübertragung vorgesehen, wobei im Falle sogenannter Weitspannluftkabel Spannweiten von 435 m und mehr überbrückt werden konnten. Bei solchen Luftkabeln treten erhebliche Probleme mechanischer Art auf, etwa Schwingungs- oder Belastungsschwierigkeiten, die man durch geeignete Bewehrungen auch nichtmetallischer Art zu mindern versucht hat. Ein besonderes Problem hierbei sind die der optischen Nachrichtenübermittlung dienenden Lichtwellenleiter, die in die Hohl- oder Bündelader bildenden Kunststoffröhrchen untergebracht sind. Werden diese Fasern während der Herstellung, während des Transportes oder der Verlegung bzw. im Betrieb äußeren mechanischen Kräften ausgesetzt, dann führt diese Beanspruchung zu einer Änderung der Übertragungseigenschaften des Kabels.

Es ist daher Aufgabe der Erfindung, dafür zu sorgen, daß in gattungsgemäßen Kabeln die optischen Fasern nicht nur nach außen geschützt, sicher innerhalb des Kabels untergebracht sind, sondern auch daß sie innerhalb des Kabels unbeeinflußt von äußeren mechanischen Kräften während des Betriebes verbleiben.

Gelöst wird diese Aufgabe gemäß der Erfindung dadurch, daß der zugfeste Kern eine elastische Kunststoffummantelung aufweist, auf der die Hohl- oder Bündeladern mit einer Bedeckung von 60 - 80 %, vorzugsweise 70 - 90 % aufgeseilt sind. Die Erfindung beruht dabei auf der Erkenntnis, daß wegen der nicht vollständigen Bedeckung der elastischen Kunststoffummantelung durch die aufgeseilten Hohl- oder Bündeladern diese die Möglichkeit haben, bei entsprechenden Zugbeanspruchungen sich in die elastische Hülle des Kernes einzudrücken, so daß hierdurch eine automatische Vergrößerung der Faserlängenreserve, d. h. eine Anpassung der freien Faserlänge an die äußeren mechanischen Kräfte erfolgt. Hierdurch bleiben die optischen Fasern auch unter den bei Luftkabeln maßgeblichen Bedingungen kräftefrei. Mit der hierdurch erzielten erhöhten Faserlängenreserve erhöht sich auch die Dehnfähigkeit eines gemäß der Erfindung ausgebildeten Kabels sowie die Flexibilität der gesamten Anordnung.

Bei einem erdverlegten optischen Kabel hat man zwar bereits (DE-PS 25 41 178) sogenannte Polsterelemente als zugfeste Elemente mit einer weichen Umhüllung ausgebildet, dies jedoch mit dem Ziel, einen unmittelbaren Kontakt zwischen den Lichtwellenleitern bzw. den Lichtwellenleitern und den zugfesten Elementen auszuschließen. Außerdem soll verhindert werden, daß diese Elemente einen gegenseitigen Druck aufeinander ausüben. Wird jedoch, wie bei dem bekannten optischen Kabel auch, für die über den zentralen Kern angeordnete Lage eine vollständige, d. h. 100prozentige Bedeckung vorgesehen, dann erfolgt in jedem Fall eine Abstützung der Elemente gegeneinander, so daß bei einer solchen Gewölbebildung eine freie Bewegung der optischen Elemente nicht mehr möglich, und damit eine selbsttätige Vergrößerung der Faserlängenreserve ausgeschlossen ist.

Den hohen Anforderungen an die gattungsgemäßen Luftkabel entsprechend, ist es erforderlich, den die optischen Elemente tragenden Kern zugfest auszubilden, als hierfür geeignete Elemente haben sich Fäden oder Stränge auf Basis Polyamid oder Polyaramid erwiesen, wie sie unter dem Handelsnamen Kevlar bekannt sind. Eine andere vorteilhafte Möglichkeit in Durchführung der Erfindung ist die, wenn der zugfeste Kern von Karbonfasern oder -strängen gebildet wird.

Mit der in Grenzen freien Bewegbarkeit der auf den zentralen Kern aufgeseilten Hohl- oder Bündeladern wird diesen die Möglichkeit gegeben, sich in die elastische Ummantelung des zugfesten Kernes hineinzudrücken. Im Gegensatz zu dem bekannten optischen Kabel mit Polsterschichten aufweisenden Zugelementen in der gleichen Lage wie die optischen Elemente werden diese bei einem nach der Erfindung aufgebauten optischen Luftkabel nicht durch Polsterelemente in ihrer radialen Bewegung gehindert. Um durch Eindrücken der Hohl- bzw. Bündeladern in die elastische Kunststoffummantelung des Kernes größere Faserlängenreserven zu erreichen, wird man zweckmäßig die Kunststoffummantelung aus einem gummielastischen Polyurethan herstellen. Dieses Material, beispielsweise auch in geschäumter Form, ist durch die aufgeseilten Hohl- oder Bündeladern problemlos verformbar, zudem weist es gute Gleiteigenschaften, ausreichende mechanische Festigkeiten und chemische Beständigkeiten auf. Kommt es auf alle diese Eigenschaften nicht an, ist es selbstverständlich auch möglich, andere elastische Materialien für die Kunststoffummantelung des zugfesten Kernes einzusetzen, beispielsweise kann die Ummantelung aus einem elastomeren Werkstoff, etwa einem geeigneten Kautschukmaterial, beispielsweise einem Silikonkautschuk, aber auch einem thermoplastischen Kautschuk, hergestellt sein.

Durch eine Folie auf Kunststoffbasis, wie sie beispielsweise unter dem Handelsnamen Hostaphan bekannt ist, werden die Hohl- oder Bündeladern auf der Ummantelung des zugfesten Kernes während der Herstellung des Kabels vor dem Aufbringen weiterer Schichten gehalten. Das Aufbringen zweier Wendeln im Gegenschlag hat den Vorteil, daß praktisch eine geschlossene Hülle gebildet wird, bevor ein erster Schutzmantel aufextrudiert wird. Die Folienbedeckung in dieser Form erhöht die freie Beweglichkeit der aufgeseilten optischen Adern weiter.

Für hohe Spannweiten insbesondere reicht allein der zugfeste Kern zur Aufnahme der mechanischen Beanspruchungen nicht aus, die Erfindung sieht deshalb vor, daß der erste Schutzmantel von einer Hülle aus zugfesten Fasern umgeben ist. Geeignet hierfür sind wiederum die oben bereits erwähnten Fasern auf Basis Polyamid oder Polyaramid, aber auch Glasfasern sind geeignet. Hilfreich kann hier mitunter auch sein, wenn auf den Faserverbund zusätzlich ein Heißschmelzkleber aufgebracht wird, der dann automatisch bei Extrusionstemperatur des Materials des Außenmantels zu einer innigen Verbindung mit der Innenfläche des Mantels führt.

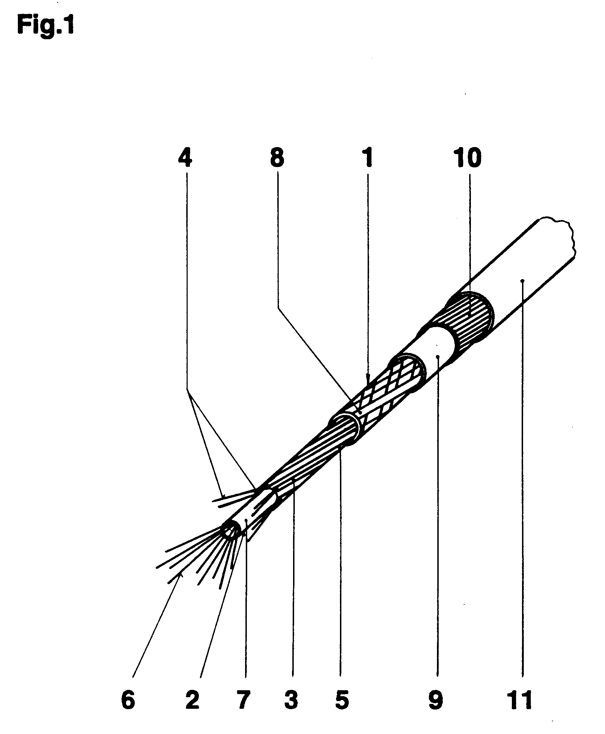

Die Erfindung sei anhand des in der Figur als Ausführungsbeispiel dargestellten metallfreien Luftkabels näher erläutert.

Das optische Luftkabel 1, beispielsweise angeordnet im Zuge einer Hochspannungs-Freileitung besteht aus um den Kern 2 herumgeseilten optischen Hohl- oder Bündeladern 3, hier in Form von Kunststoffröhrchen, in denen die Lichtwellenleiter 4, gegebenenfalls in einer dichtenden Masse, beispielsweise auf Basis tixotropierter Mineralöle, lose geführt sind. Lücken 5 im Verseilverband lassen erkennen, daß die Umseilung nicht mit 100prozentiger Bedeckung erfolgt, die Hohl- oder Bündeladern sich also nicht gewölbeartig gegeneinander abstützen. Der Kern 2 besteht entsprechend der Erfindung aus einem Bündel hochzugfester Fäden oder Stränge 6, die von einer Kunststoffummantelung 7 beispielsweise aus einem extrudierten gummielastischen Polyurethan umschlossen sind. Anstelle dieser geschlossenen Kunststoffummantelung kann man selbstverständlich auch so vorgehen, eine Bewicklung aus einem polsternd wirkenden Band vorzunehmen. Unabhängig davon kommt es für die Erfindung darauf an, daß die durch die spezielle Aufseilung mit einer Bedeckung von beispielsweise 80 % weitgehend frei beweglichen Hohl- oder Bündeladern 3 bei mechanischer Beanspruchung des Kabels die Möglichkeit bekommen, den wirkenden Kräften dadurch auszuweichen, daß sie sich mit einer radialen Bewegung in die Oberfläche der elastischen Kunststoffummantelung 7 eindrücken.

Die freie Bewegbarkeit der optischen Hohl- oder Bündeladern 3 ist weiter dadurch sichergestellt, daß auf die Umseilung eine Bewicklung aus einem oder mehreren Kunststoffbändern vorgenommen ist, durch die die optischen Hohl- oder Bündeladern 3 sicher auf den inneren Kern gehalten werden, gleichzeitig aber die Möglichkeit einer weitgehend freien Bewegbarkeit innerhalb dieser Bandbewicklung erreicht ist. Der über der Bandbewicklung 8 aufgebrachte erste Schutzmantel 9 dient im wesentlichen der weiteren Verstärkung der Kabelseele, er ist überdeckt von der Lage 10, beispielsweise in Form sogenannter Rowings aus z. B. Glasfasern. An dieser Stelle ist es auch möglich, eine oder mehrere Lagen aus hochzugfesten Fäden auf Polyamid- oder Polyaramidbasis aufzubringen, wobei man bei mehreren Lagen vorteilhaft die Schlagrichtung von Lage zu Lage ändert. Der nach außen abschließende Mantel 11 ist aus einem geeigneten, abriebfesten Kunststoff hergestellt, durch geeignete Zusätze in die Mischung kann er auch flammfest eingestellt sein.

Auf die dargestellte Ausführungsform ist die Erfindung selbstverständlich nicht beschränkt, der Schichtenaufbau kann jedem anderen Verwendungszweck angepaßt sein, wesentlich für die Erfindung ist jedoch in jedem Fall die den zugfesten Kern umgebende Kunststoffummantelung aus einem elastischen Material, so daß bei entsprechender Beanspruchung des Kabels die die empfindlichen optischen Fasern enthaltenden Hohl- oder Bündeladern bei ihrer freien Bewegung in radialer Richtung sich in die Kunststoffummantelung einzudrücken in der Lage sind.

## Patentansprüche

1. Metallfreies Luftkabel aus um einen zugfesten Kern verseilten optischen Hohl- oder Bündeladern sowie einer weiteren mehrschichtigen Schutzumhüllung, dadurch gekennzeichnet, daß der zugfeste Kern eine elastische Kunststoffummantelung aufweist, auf der die Hohl- oder Bündeladern mit einer Bedeckung von 60 - 80 %, vorzugsweise 70 - 90 % aufgeseilt sind.

2. Luftkabel nach Anspruch 1, dadurch gekennzeichnet, daß der zugfeste Kern aus Fäden oder Strängen auf Basis Polyamid oder Polyaramid besteht.

3. Luftkabel nach Anspruch 1, dadurch gekennzeichnet, daß der zugfeste Kern von Carbonfasern oder -strängen gebildet wird.

4. Luftkabel nach Anspruch 1 oder einem der folgenden, dadurch gekennzeichnet, daß die Kunststoffummantelung aus einem gummielastischen Polyurethan besteht.

5. Luftkabel nach Anspruch 1 oder einem der folgenden, dadurch gekennzeichnet, daß die Kunststoffummantelung aus einem Elastomeren besteht.

6. Luftkabel nach Anspruch 1 oder einem der folgenden, dadurch gekennzeichnet, daß die Kunststoffummantelung aus einem geschäumten Material besteht.

7. Luftkabel nach Anspruch 1 oder einem der folgenden, dadurch gekennzeichnet, daß die Hohl- oder Bündeladern auf der elastischen Kunststoffumhüllung des Kernes durch eine Bebänderung gehalten sind.

8. Luftkabel nach Anspruch 7, dadurch gekennzeichnet, daß die Bebänderung von einem ersten extrudierten Schutzmantel umschlossen ist.

9. Luftkabel nach Anspruch 8, dadurch gekennzeichnet, daß der Schutzmantel von einer Hülle aus zugfesten ggf. harzgetränkten Glasfaser umgeben ist.

10. Luftkabel nach Anspruch 9, dadurch gekennzeichnet, daß die Hülle mit der Innenfläche des Außenmantels verklebt ist.
